# EUROPÄISCHE PATENTSCHRIFT

(11) **EP 2 276 149 B1**
(45) Veröffentlichungstag und Bekanntmachung des Hinweises auf die Patenterteilung: **21.04.2021**
(21) Anmeldenummer: 10164078.7
(22) Anmeldetag: 27.05.2010
(51) Int. Cl.: H02K 3/28, H02K 1/14, H02K 7/18

(54) **Wicklungsschema für einen segmentierten Ständer einer dynamoelektrischen Maschine**
Coil schematic for a segmented stand of a dynamo electric machine
Schéma d'enroulement pour un support segmenté d'une machine dynamoélectrique

(30) Priorität: 13.07.2009 DE 102009032880
(43) Veröffentlichungstag der Anmeldung: 19.01.2011
(73) Patentinhaber: Flender GmbH, 46395 Bocholt (DE)
(72) Erfinder: Schäfer, Rüdiger, 13599, Berlin (DE); Möhle, Axel, 12163 Berlin (DE)
(74) Vertreter: Maier, Daniel Oliver

(56) Entgegenhaltungen:
- EP-A1- 2 166 645
- EP-A2- 1 093 207
- EP-A2- 1 780 869
- DE-A1-102005 029 895

## Beschreibung

Die Erfindung betrifft ein Segment für einen ringförmigen Stator einer dynamoelektrischen Maschine. Die Erfindung kommt insbesondere bei sehr großen elektrischen Maschinen zum Einsatz. Als Beispiel für derartige Maschinen seien Generatoren für Windkraftanlagen, Gezeitenkraftwerke, Ringmotoren oder Antriebe von Baumaschinen wie Bagger genannt.

Die Energiegewinnung aus regenerativen Energiequellen gewinnt mehr und mehr an Bedeutung. Entsprechend werden auch immer höhere Anforderungen an die zur Energiewandlung eingesetzten Komponenten gestellt. Dies hat beispielsweise zur Folge, dass Generatoren für Windkraftanlagen ein immer größeres Bauvolumen erfordern.

Mit zunehmender Leistungsklasse werden getriebelose Windenergieanlagen wettbewerbsfähig im Vergleich zu Anlagen, bei denen ein mechanisches Getriebe zwischen den vom Wind angetriebenen Rotorblättern und einem Synchrongenerator geschaltet ist. Hauptvorteil einer solchen getriebelosen Konstruktion ist der im Vergleich zu Windkraftanlagen mit Getriebe deutlich einfachere Aufbau. Durch die Einsparung des Getriebes werden weniger rotierende Maschinenkomponenten benötigt. Hieraus resultieren ein verminderter Wartungsaufwand und eine erhöhte Verfügbarkeit der Anlage.

Insbesondere sehr große Windkraftanlagen arbeiten in der Regel mit vergleichsweise niedrigen Drehzahlen. Bei einer getriebelosen Ausführung müssen derartige Anlagen daher mit sehr großen und schweren Generatoren ausgestattet werden. Der Durchmesser dieser Maschinen überschreitet hierbei leicht 4 oder 5 m.

Durch die zunehmende Größe der Windkraftgeneratoren, die die höheren Leistungen dieser Anlagen zwangsläufig mit sich bringen, wird deren Montage immer schwieriger. Getriebelose Turbinen von Windkraft- oder auch Gezeitenkraftwerken stellen jedoch auch große Herausforderungen hinsichtlich Transport und Logistik.

Generatoren für getriebelose Windkraftanlagen sind häufig mit einem ringförmigen Läufer mit einer Hohlwelle ausgeführt. Eine derartige elektrische Maschine ist beispielsweise aus der WO 2006/032969 A2 bekannt. Diese Schrift offenbart einen Stator, der in Umfangvorrichtung in mehrere Segmente unterteilt ist. Jedes Statorsegment umfasst ein schwalbenschwanzförmiges Profil, das in ein Fenster eines Statorringes eingreift. So wird jeder dieser Sektoren in axialer Richtung ausziehbar, ohne dass der gesamte Stator abgenommen werden muss.

EP 1 093 207 A2, DE 10 2005 029895 A1 und EP 1 780 869 A2 offenbaren Segmente für einen ringförmigen Stator einer dynamoelektrischen Maschine. EP 2 166 645 A1 offenbart eine verlängerte Stirnverbindung.

Aus der EP 2 166 645 A1 ist ein Segment gemäß dem Oberbegriff des Anspruchs 1 bekannt.

Der Erfindung liegt die Aufgabe zugrunde, Transport und Montage großer elektrischer Maschinen zu vereinfachen.
- Diese Aufgabe wird durch ein Segment für einen ringförmigen Stator einer dynamoelektrischen Maschine mit den Merkmalen nach Anspruch 1 gelöst.

Vorteilhafte Ausführungsformen der Erfindung sind den Unteransprüchen zu entnehmen. Der Kerngedanke der Erfindung ist darin zu sehen, dass die Segmente des Stators derart gestaltet sind, dass eine elektrische Verbindung der Segmente untereinander nicht erforderlich ist. Eine solche Verbindung wäre sehr aufwändig. Um sie zu realisieren müssten spezielle Spulen gefertigt werden, die in der Spulennase noch eine gewisse Flexibilität aufweisen und nachträglich in die Nuten des Stators eingelegt werden müssten, um die Segmentgrenzen elektrisch zu überbrücken.

Diese Spulen müssten dann nach dem eigentlichen Imprägnierprozess der Wicklung noch nachträglich von Hand isoliert werden.

Eine alternative Lösung zur elektrischen Verbindung der Segmente des Stators wäre darin zu sehen, die Spulen, die an den Segmentgrenzen angeordnet sind, jeweils nur als Halbspulen auszuführen und diese nach dem Aufbau des Stators zusammen zu löten. Jedoch ist auch hier eine nachträgliche Isolierung notwendig. Den oben genannten nachteiligen Verfahren ist gemein, dass eine anschließende zerstörungsfreie Trennung der Segmente beispielsweise zur Wartung oder Reparaturzwecken nicht mehr möglich ist.

Der Erfindung liegt die Erkenntnis zu Grunde, dass sich die oben beschriebenen problematischen elektrischen Verbindungen zwischen den einzelnen Segmenten des Stators eliminieren lassen, wenn sämtliche Spulen eines Segmentes innerhalb des Segments geschlossen werden. Das bedeutet, dass auch die an den Segmentgrenzen angeordneten Spulen innerhalb des Segmentes geschlossen werden. Dies wird dadurch ermöglicht, dass er an der ersten Segmentgrenze angeordnete erste Leiter über eine verlängerte Stirnverbindung am Wickelkopf mit dem an der zweiten Segmentgrenze angeordneten zweiten Leiter verbunden wird. Somit muss der erste Leiter nicht über die linke Segmentgrenze hinweg mit einem weiteren Leiter eines benachbarten weiteren Segmentes verbunden werden. Als Rückenleiter für den ersten Leiter dient vielmehr der zweite Leiter, der sich an der rechten Segmentgrenze befindet.

Die durch die Verbindung des ersten und zweiten Leiters geschaffene Spule umschließt die mindestens zwei verbliebenen Spulen. Insgesamt umfasst das erfindungsgemäße Segment daher mindestens drei Spulen. Das Segment kann als vollständige, abgeschlossene Einheit imprägniert werden. Nachträgliche Spulenverbindungen über die Segmentgrenzen hinweg entfallen. Die so entstehenden erfindungsgemäßen Segmente können als abgeschlossene Funktionselemente montiert und beispielsweise zur Wartungs- oder Reparaturzwecken demontiert werden. Hierbei kann anstelle eines kompletten Ständers ein einzelnes Segment als Ersatzteil vorgehalten werden.

Bei der erfindungsgemäßen elektrischen Maschine kann es sich sowohl um einen Generator als auch um einen Motor handeln. Vorteilhaft ist die erfindungsgemäße Segmentierung des Ständers insbesondere bei sehr großen Bohrungsdurchmessern, unabhängig davon, ob die Maschine in erster Linie für den motorischen oder generatorischen Einsatz vorgesehen ist.

In vorteilhafter Ausgestaltung der Erfindung sind die Spulen unabhängig von weiteren Spulen der weiteren Segmente zur Erzeugung eines ersten Polpaares eines Drehfeldes mit einem Drehstrom bestrombar.

Selbstverständlich kann das Segment auch noch mehr Spulen aufweisen, so dass mit deren Hilfe auch eine höhere Polpaarzahl als eins erzeugt werden kann. So ist eine Ausgestaltungsform der Erfindung vorteilhaft, bei der das Segment für jede Phase des Drehstromsystems mindestens eine innerhalb des Segmentes geschlossene zweite Spule zur Erzeugung eines zweiten Polpaares aufweist, die unabhängig von weiteren Spulen der weiteren Segmente zur Erzeugung eines zweiten Polpaares des Drehfeldes mit dem Drehstrom bestrombar sind.

Die zweckmäßigerweise als Umfangswicklung ausgeführten Wicklungen sind in vorteilhafter Ausgestaltung der Erfindung derart gestaltet, dass die Spulen als Etagenwicklung angeordnet sind, so dass sich die Leiter der drei Spulen eines Polpaares im Bereich der Wickelköpfe überlagern.

Eine einfache Herstellung eines solchen Segmentes ist hierbei in weiterer vorteilhafter Ausgestaltung der Erfindung dadurch gegeben, dass die Spulen als Einschichtwicklung ausgebildet sind.

Selbstverständlich ist alternativ jedoch eine Ausgestaltung der Erfindung denkbar, bei der die Spulen als Zweischichtwicklung ausgebildet sind.

Insbesondere bei sehr großen elektrodynamischen Maschinen wird ein erheblicher Transportvorteil dadurch erzielt, dass die geschlossene Ringform des Stators durch Trennen der Segmente voneinander aufhebbar ist. Bei einer derartigen Ausgestaltung muss beispielsweise über die Straße nicht mehr der komplette Hohlzylinder transportiert werden, der den vollständigen Stator bildet. Die einzelnen Segmente nehmen im demontierten Zustand deutlich weniger Volumen in Anspruch als im montierten Zustand.

Vorteilhaft ist ebenso eine Ausgestaltung der Erfindung, bei der eine dynamoelektrische Maschine mit mindestens zwei Segmenten einer der zuvor beschriebenen Ausführungsformen als direkt angetriebener Generator für eine Windkraftanlage oder ein Gezeitenkraftwerk ausgebildet ist. Derartige Generatoren benötigen ein hohes Bauvolumen, um aufgrund der niedrigen Drehzahlen, die sich mit den hier genutzten Antriebskräften erzeugen lassen, eine hohe elektrische Leistung zu liefern. Ebenfalls vorteilhaft ist der Einsatz einer elektrodynamischen Maschine mit segmentiertem Ständer entsprechend einer Ausführungsform der Erfindung in zahlreichen anderen Einsatzbereichen, die ein großes Drehmoment und damit einen großen Maschinendurchmesser erforderlich machen.

Eine Windkraftanlage mit einer dynamoelektrischen Maschine, deren Ständer aus einzelnen teilringförmigen Segmenten einer der zuvor beschriebenen Ausführungsformen gefertigt ist, lässt sich sehr leicht an ihrem späteren Einsatzort montieren. Die einzelnen Segmente des Stators können im Vergleich zu einer kompletten dynamoelektrischen Maschine sehr viel besser zum Aufbauort z.B. über die Straße transportiert werden.

Im Folgenden wird die Erfindung anhand der in den Figuren dargestellten Ausführungsbeispiele näher beschrieben und erläutert. Es zeigen:
- FIG 1: ein Wicklungsschema für ein Segment eines Stators in konventioneller Ausführung,
- FIG 2: ein Wicklungsschema für ein Segment gemäß einer ersten Ausgestaltung der Erfindung,
- FIG 3: ein Wicklungsschema für ein Segment gemäß einer zweiten Ausgestaltung der Erfindung und
- FIG 4: eine Windkraftanlage mit einer dynamoelektrischen Maschine, die einen segmentierten Stator aufweist.

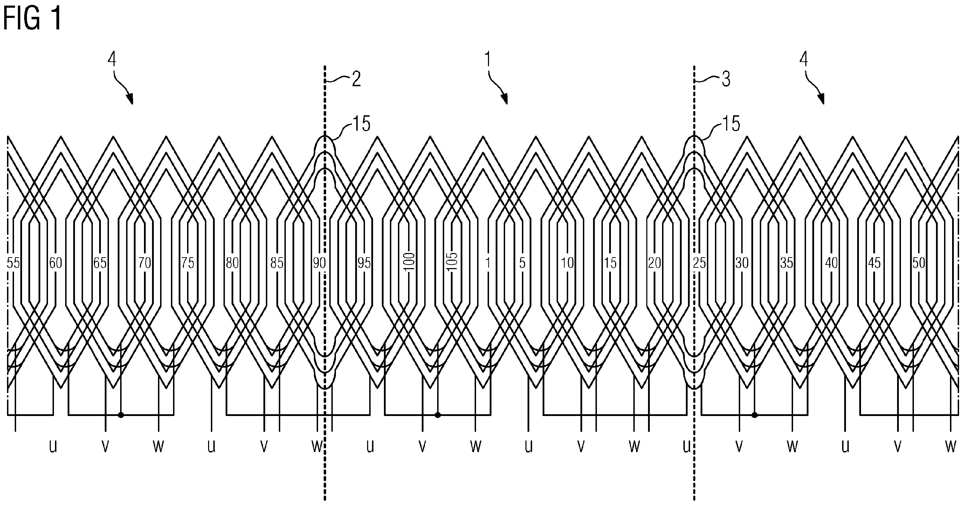

FIG 1 zeigt ein Wicklungsschema für ein Segment 1 eines Stators in konventioneller Ausführung, das nicht Teil der beanspruchten Erfindung ist. Das dargestellte Wicklungsschema ist bei einer sehr großen dynamoelektrischen Maschine realisiert, deren Stator segmentiert ausgeführt ist, um dessen Transportvolumen soweit zu reduzieren, dass der Stator über die Straße zu einem späteren Einsatzort transportiert und dort montiert werden kann. Ein typisches Beispiel für eine derartige dynamoelektrische Maschine ist ein Windkraftgenerator, der als Hohlwellengenerator ausgeführt ist.

Ein in der FIG 1 mittig dargestelltes Segment 1 wird bei der Montage des Windkraftgenerators mit zwei weiteren Segmenten 4 verbunden. Die weiteren Segmente 4 schließen sich dem Segment 1 an einer ersten und zweiten Segmentgrenze 2,3 an. Das Segment 1 und die weiteren Segmente 4 sind weitgehend baugleich ausgeführt. Jedes der Segmente ist mit Spulen ausgeführt, die die Erzeugung eines Drehfeldes ermöglichen. Jedoch sind nicht alle Spulen innerhalb des Segmentes 1 geschlossen. An der ersten Segmentgrenze 2 und an der zweiten Segmentgrenze 3 befindet sich jeweils eine Halbspule, die mit einer Halbspule eines der weiteren Segmente 4 elektrisch verbunden werden muss. Um dies zu ermöglichen, werden nach dem Aneinanderfügen des Segmentes 1 mit den weiteren Segmenten 4 spezielle Verbindungsspulen 15 verwendet, die die besagten Halbspulen über die Segmentgrenzen 2,3 hinweg elektrisch verbinden. Diese müssen in der Spulennase noch eine gewisse Flexibilität aufweisen. Die Verbindungsspulen 15 können dadurch nicht im Zuge des Imprägnierprozesses der Wicklung mitisoliert werden sondern müssen nachträglich von Hand isoliert werden.

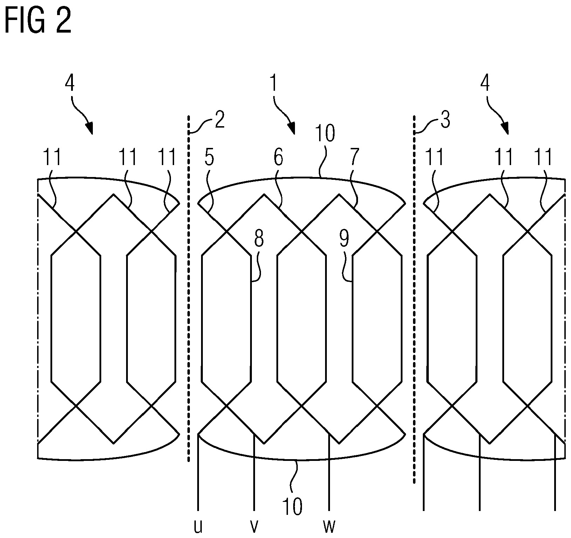

FIG 2 zeigt ein Wicklungsschema für ein Segment 1 gemäß einer ersten Ausgestaltung der Erfindung. Auch hier sei angenommen, dass das Wicklungsschema bzw. das Segment 1 für einen Hohlwellengenerator einer Windkraftanlage vorgesehen ist. Das mittig dargestellte Segment 1 wird beim Aufbau des Windkraftgenerators an einer ersten Segmentgrenze 2 und einer zweiten Segmentgrenze 3 mit weiteren Segmenten 4 mechanisch verbunden. Sind N-Segmente für den Hohlwellengenerator vorgesehen, so spannt jedes der Segmente 1 bezüglich seiner Querschnittsfläche einen Kreisbogen mit einem Winkel von 360°/N auf.

Jedes der Segmente 1 umfasst drei Spulen 5,6,7 - jeweils eine Spule 5,6,7 für jede Phase eines Drehstromsystems. Somit lässt sich ein Polpaar mit jedem Segment 1 für die dynamoelektrische Maschine realisieren. Zwei dieser Spulen 5,6,7 sind auf herkömmliche Weise innerhalb des Segmentes 1 geschlossen. Eine dritte Spule 5 wird dadurch gebildet, dass ein erster Leiter 8, der in der Nähe der ersten Segmentgrenze 2 angeordnet ist, über eine Stirnverbindung 10 mit einem zweiten Leiter 9 verbunden wird, der in der Nähe der zweiten Segmentgrenze 3 angeordnet ist. Auf diese Art und Weise umschließt die so gebildete Spule 5 die zwei herkömmlich geschlossenen Spulen 6,7. Das magnetische Verhalten eines derartigen Segmentes 1 entspricht im Wesentlichen einem magnetischen Verhalten, wie es bei einer konventionellen Wicklung gemäß FIG 1 erzielt wird. Jedoch sind keine Verbindungselemente notwendig, die die Spulen 5,6,7 mit weiteren Spulen 11 der weiteren Segmente 4 elektrisch verbinden. Die Montage eines derartigen Hohlwellengenerators gestaltet sich deutlich einfacher, da jedes Segment 1 für sich autark bestromt werden kann und keine elektrische Verbindung und die damit verbundene nachträgliche Isolierung über die Segmentgrenzen 2,3 hinweg erforderlich ist. Auch Wartungs- und Reparaturarbeiten werden durch diese Ausgestaltung des Hohlwellengenerators deutlich vereinfacht. Tritt ein Defekt an einem Segment 1 auf, so kann dieses ausgetauscht werden, ohne das hierfür irgendwie geartete, Segmentgrenzen 2,3 überwindende Verbindungselemente aufgetrennt werden müssen. Einzelne Segmente 1 können als Ersatzteile vorgehalten werden, so dass ein Austausch im Falle eines Defektes zeitnah erfolgen kann. Stillstandszeiten werden auf diese Art und Weise erheblich reduziert.

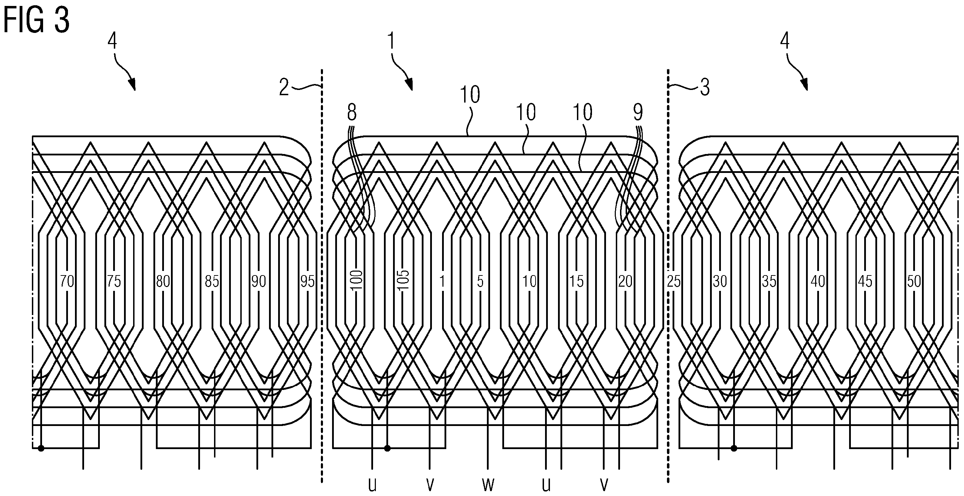

FIG 3 zeigt ein Wicklungsschema für ein Segment 1 gemäß einer zweiten Ausgestaltung der Erfindung. Im Gegensatz zu der ersten Ausgestaltung gemäß FIG 2 sind hier drei Nuten pro Pol und Strang vorgesehen. Daraus ergibt sich, dass für jede Phase eine Spulengruppe bestehend aus drei konzentrisch zueinander angeordneten Spulen vorgesehen ist. Die Wicklung dieser Spulen ist analog zu der in FIG 2 dargestellten Wicklung ausgeführt. D.h., auch hier werden an den Segmentgrenzen 2,3 angeordnete Leiter 8,9 über Stirnverbindungen 10 miteinander verbunden. Die sich daraus ergebenden Vorteile sind bereits in der Beschreibung zu FIG 2 genannt.

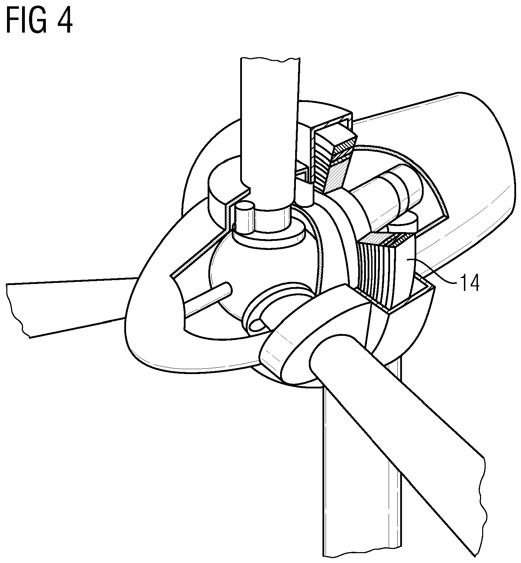

FIG 4 zeigt eine Windkraftanlage mit einer dynamoelektrischen Maschine, die einen segmentierten Stator aufweist. Die elektrische Maschine 14 ist als Hohlwellengenerator ausgeführt. Auf ein Getriebe wurde hierbei verzichtet, so dass der Stator der dynamoelektrischen Maschine 14 einen sehr großen Durchmesser aufweist. Der Stator ist segmentiert aufgebaut, so dass er durch Aneinanderfügen der einzelnen Segmente am späteren Einsatzort montiert werden kann. Aufgrund der vorteilhaften Ausgestaltung dieser Segmente, bei denen es sich um eine Ausführung gemäß der vorliegenden Erfindung handelt, gestaltet sich die Montage des Hohlwellengenerators vergleichsweise einfach. Eine elektrische Verbindung der einzelnen Segmente untereinander ist zur Bestromung der Spulen der Segmente nicht notwendig. Hierdurch wird die Montage erheblich vereinfacht, da elektrische Segmentverbindungen, die im Nachhinein auf der Baustelle zwischen den Spulen der Segmente gezogen werden, noch aufwändig isoliert werden müssten. Hingegen besteht der hier dargestellte Generator aus einzelnen voll elektrisch funktionstüchtigen Segmenten, bei denen diese Verbindung nicht benötigt wird.

## Patentansprüche

1. Segment (1) für einen ringförmigen Stator einer dynamoelektrischen Maschine (14), das einen im Wesentlichen kreisbogenförmigen Querschnitt umfasst, wobei das Segment (1) aufweist:
- eine erste und eine zweite Segmentgrenze (2,3), an die ein weiteres Segment (4) angefügt werden kann,
- mindestens eine Spule (5,6,7) für jede Phase eines Drehstromsystems,
- mindestens einen ersten Leiter (8) und mindestens einen zweiten Leiter (9) aufweist,
wobei
- der erste Leiter (8) an der ersten Segmentgrenze (2) mit dem zweiten Leiter (9) an der zweiten Segmentgrenze (3) über eine verlängerte Stirnverbindung (10) im Bereich der Wickelköpfe verbunden ist, so dass die so gebildete Spule (5) zumindest die zwei verbleibenden Spulen (6,7) umschließt,
wobei die Spulen (5,6,7) unabhängig von weiteren Spulen (11) der weiteren Segmente (4) zur Erzeugung eines ersten Polpaares eines Drehfeldes mit einem Drehstrom bestrombar sind, **dadurch gekennzeichnet, dass** das Segment (1) für jede Phase des Drehstromsystems mindestens eine innerhalb des Segmentes (1) geschlossene zweite Spule zur Erzeugung eines zweiten Polpaares aufweist, die unabhängig von den weiteren Spulen (11) der weiteren Segmente (4) zur Erzeugung eines zweiten Polpaares des Drehfeldes mit dem Drehstrom bestrombar sind.

2. Segment nach Anspruch 1,
wobei die Spulen (5,6,7) als Etagenwicklung angeordnet sind, so dass sich die Leiter der drei Spulen (5,6,7) eines Polpaares im Bereich der Wickelköpfe überlagern.

3. Segment nach einem der vorhergehenden Ansprüche,
wobei die Spulen (5,6,7) als Einschichtwicklung ausgebildet sind.

4. Segment nach einem der vorhergehenden Ansprüche,
wobei die Spulen (5,6,7) als Zweischichtwicklung ausgebildet sind.

5. Segment nach einem der Ansprüche 1 bis 4,
die geschlossene Ringform des Stators durch Trennen der Segmente (1,4) voneinander aufhebbar ist.

6. Dynamoelektrische Maschine (14) mit mindestens zwei Segmenten (1,4) nach einem der Ansprüche 1 bis 5.

7. Dynamoelektrische Maschine (14) nach Anspruch 6, wobei die dynamoelektrische Maschine (14) als direkt angetriebener Generator für eine Windkraftanlage oder ein Gezeitenkraftwerk ausgebildet ist.

8. Windkraftanlage mit einer dynamoelektrischen Maschine (14) nach einem der Ansprüche 6 oder 7.

## Claims

1. Segment (1) for an annular stator of a dynamoelectrical machine (14) which has a cross section essentially in the form of a circular arc, wherein the segment (1) has:
- a first and a second segment boundary (2, 3), to which a further segment (4) can be attached,
- at least one coil (5, 6, 7) for each phase of a polyphase system,
at least one first conductor (8) and at least one second conductor (9),
wherein
- the first conductor (8), at the first segment boundary (2), is connected to the second conductor (9), at the second segment boundary (3), via a lengthened end connection (10) in the area of the end windings, such that the coil (5) which is formed in this way surrounds at least the two remaining coils (6, 7),
wherein a polyphase current can be passed through the coils (5, 6, 7), independently of further coils (11) of the further segments (4), in order to produce a first pole pair of a rotating field,
**characterized in that**
the segment (1) for each phase of the polyphase system has at least one second coil, which is closed within the segment (1) in order to produce a second pole pair, through which the polyphase current can be passed independently of the further coils (11) of the further segments (4) in order to produce a second pole pair of the rotating field.

2. Segment according to Claim 1,
wherein the coils (5, 6, 7) are arranged as a tier winding, such that the conductors of the three coils (5, 6, 7) of a pole pair are superimposed in the area of the end windings.

3. Segment according to either of the preceding claims,
wherein the coils (5, 6, 7) are in the form of a single-layer winding.

4. Segment according to one of the preceding claims,
wherein the coils (5, 6, 7) are in the form of a two-layer winding.

5. Segment according to one of Claims 1 to 4,
wherein the closed annular shape of the stator can be interrupted by separating the segments (1, 4) from one another.

6. Dynamoelectrical machine (14) having at least two segments (1, 4) according to one of Claims 1 to 5.

7. Dynamoelectrical machine (14) according to Claim 6, wherein the dynamoelectrical machine (14) is in the form of a directly driven generator for a wind power installation or a tidal power station.

8. Wind power installation having a dynamoelectrical machine (14) according to either of Claims 6 and 7.

## Revendications

1. Segment (1) d'un stator annulaire d'une machine (14) dynamoélectrique, qui comprend une section transversale sensiblement en forme d'arc de cercle, le segment (1) ayant :
- une première et une deuxième limite (2, 3) de segment, auxquelles un autre segment (4) peut être joint,
- au moins une bobine (5, 6, 7) pour chaque phase d'un système de courant triphasé,
- au moins un premier conducteur (8) et au moins un deuxième conducteur (9),
dans lequel
- le premier conducteur (8) à la première limite (2) du segment, est relié au deuxième conducteur (9) à la deuxième limite (3) du segment par une liaison (10) frontale prolongée dans la partie des têtes d'enroulement, de manière à ce que la bobine (5) ainsi formée entoure au moins les deux bobines (6, 7) restantes,
dans lequel les bobines (5, 6, 7) peuvent être alimentées en un courant triphasé indépendamment d'autres bobines (11) d'autres segments (4) pour la production d'une première paire de pôles d'un champ tournant,
**caractérisé en ce que**
le segment (1) pour chaque phase du système à courant triphasé a, pour la production d'une deuxième paire de pôles, au moins une deuxième bobine, qui sont fermées à l'intérieur du segment (1) et qui peuvent, pour la production d'une deuxième paire de pôles du champ tournant, être alimentées en le courant triphasé, indépendamment des autres bobines (11) des autres segments (4).

2. Segment suivant la revendication 1,
dans lequel les bobines (5, 6, 7) sont disposées sous la forme d'enroulement en étage, de manière à ce que les conducteurs des trois bobines (5, 6, 7) d'une paire de pôles se superposent dans la partie des têtes d'enroulement.

3. Segment suivant l'une des revendications précédentes,
**caractérisé en ce que** les bobines (5, 6, 7) sont constituées sous la forme d'un enroulement à une couche.

4. Segment suivant l'une des revendications précédentes,
**caractérisé en ce que** les bobines (5, 6, 7) sont constituées sous la forme d'un enroulement à deux couches.

5. Segment suivant l'une des revendications 1 à 4,
**caractérisé en ce que** la forme annulaire fermée du stator peut être supprimée par séparation des segments (1, 4) l'un de l'autre.

6. Machine (14) dynamoélectrique ayant au moins deux segments (1, 4) suivant l'une des revendications 1 à 5.

7. Machine (14) dynamoélectrique suivant la revendication 6, dans laquelle la machine (14) dynamoélectrique est constituée en générateur à entraînement direct d'une éolienne ou d'une usine marée-motrice.

8. Eolienne ayant une machine (14) dynamoélectrique suivant l'une des revendications 6 ou 7.
